# EUROPÄISCHE PATENTSCHRIFT

(11) **EP 0 874 681 B1**
(45) Veröffentlichungstag und Bekanntmachung des Hinweises auf die Patenterteilung: **06.09.2000**
(21) Anmeldenummer: 96934359.9
(22) Anmeldetag: 19.08.1996
(51) Int. Cl.: B01D 53/50, B01D 53/80

(54) **VORRICHTUNG ZUR REINIGUNG VON RAUCHGAS**
SMOKE GAS PURIFICATION DEVICE
DISPOSITIF DE PURIFICATION DE GAZ DE FUMEE

(30) Priorität: 18.08.1995 DE 19530497
(43) Veröffentlichungstag der Anmeldung: 04.11.1998
(60) Teilanmeldung: 97109512.0
(73) Patentinhaber: FHW-Brenntechnik GmbH, D-84494 Neumarkt-Sankt Veit (DE)
(72) Erfinder: WEICHS, Hermann, D-84494 Neumarkt-Sankt Veit (DE); FRIEDL, Andreas, D-84489 Burghausen (DE)
(74) Vertreter: Eder, Thomas, Dr.-Ing.
(86) Internationale Anmeldenummer: DE9601542
(87) Internationale Veröffentlichungsnummer: WO9706874

(56) Entgegenhaltungen:
- EP-A- 0 342 559
- DE-A- 2 716 329
- FR-A- 2 205 833
- US-A- 5 094 604

## Beschreibung

Die Erfindung betrifft eine Vorrichtung zur Reinigung von Rauchgas mit den Merkmalen des Oberbegriffs des Patentanspruchs 1.

Zur Rauchgasreinigung, beispielsweise zur Reinigung von Abgasen aus Feuerungsanlagen, finden derzeit im wesentlichen Naß-Verfahren, Halbtrocken-Verfahren und Trocken-Verfahren Anwendung. Dabei weisen Naß-Verfahren und Halbtrocken-Verfahren einen in aller Regel höheren Reinigungswirkungsgrad auf als Trocken-Verfahren. Naß- oder Halbtrocken-Verfahren bedingen jedoch einen höheren Aufwand bei der Zufuhr, Abfuhr und der Wiederaufbereitung des zur Reinigung der Rohgase eingesetzten Ad-/Absorbens. Zudem entstehen in dem Behälter, in welchem das zugegebene Ad-/Absorbens die Absorption oder Adsorption der Schadstoffe bewirkt, extrem aggressive Säuren, die die Behälterinnenwandung bzw. darin befindliche Einrichtungen angreifen. Die mit Salzen aus dem Wäscher abgestoßenen Wässer müssen in einer Abwasseraufbereitungsanlage behandelt werden, was mit einem erheblichen Aufwand verbunden ist, der sich insbesondere bei kleineren Rauchgas-Reinigungsanlagen auswirkt.

Es wurden daher verschiedene Methoden zur Verbesserung des Reinigungswirkungsgrades von trockenen Rauchgasreinigungsverfahren vorgeschlagen. Beispielsweise ist in der EP-A-0 104 335 offenbart, daß die Reaktion zwischen den im Rohgas enthaltenen Schadstoffen und dem Ad-/Absorbens verbessert werden kann, wenn zusätzlich Wasser zugegeben wird. Dies geschieht in der Weise, daß in einer ersten Stufe trockenes, pulverförmiges Reaktionsmittel eingeblasen und in einer zweiten Stufe reines Wasser oder eine wässrige Lösung oder Suspension eines Reaktionsmittels eingedüst wird. Durch das in der zweiten Stufe zugesetzte Wasser kann eine Reaktivierung von Partikeln des Reaktionsmittels erreicht werden. Durch die Zugabe von Wasser kann somit das Reaktionsmittel besser ausgenutzt werden.

Nachteilig hierbei ist, daß die zugesetzte Wassermenge so gering gehalten werden muß, daß auch bei relativ niedriger Anfangstemperatur des Abgases der Taupunkt nicht unterschritten wird. Wird dies nicht beachtet, so kann es durch die sich bildenden aggressiven wässrigen Säuren zu einer Beschädigung der Anlage kommen.

Es ist des weiteren, beispielsweise aus der EP-A-0 029 564, bekannt, daß durch eine intensive Vermischung des Rohgases mit dem zugesetzten trockenen Ad-/Absorbens eine Erhöhung der Relativgeschwindigkeit zwischen dem Gas und den Ad-/Absorbenspartikeln und damit eine Verbesserung der Reaktionsgeschwindigkeit bzw. des Reinigungswirkungsgrades erzielbar ist. Hierzu wird in der EP-A-0 029 564 vorgeschlagen, Schall auf die Reaktionspartner einwirken zu lassen.

Aus der DE-A-32 32 080 ist bekannt, daß durch teilweise äußere Rückführung des Ad-/Absorbens bzw. der abgeschiedenen Feststoffe eine Verbesserung der Ausnutzung des Ad-/Absorbens und damit letztendlich eine Ad-/Absorbenseinsparung erreichbar ist.

Zur Verbesserung des Reinigungswirkungsgrades wird in der EP-B-0 203 430 ein Verfahren bzw. eine Vorrichtung zur Reinigung von Rauchgas vorgeschlagen, wobei das Verhältnis der Verweilzeit eines dem Reaktor zugeführten Ad-/Absorbens zur Verweilzeit des Rauchgases im Reaktor dadurch geregelt und/oder gesteuert wird, daß im Reaktor sich gegenüber dem Reaktorbehälter bewegende Einbauten, beispielsweise in Form einer rotierenden Schnecke, vorgesehen sind. Diese Schnecke kann mit einer Drehzahl von ca. 0,5 bis 120 U/min angetrieben werden, wobei sich das Ad-/Absorbens teilweise auf den Oberflächen der Schnecke ablagert, jedoch immer wieder von den zu reinigenden Rauchgasen bzw. von zusätzlich eingeblasener Druckluft aufgewirbelt wird. Somit kann insbesondere die Verweilzeit der schwereren Ad-/Absorbenspartikel relativ zur Verweilzeit des Gases im Reaktor gesteuert bzw. geregelt werden.

Nachteilig bei dieser Vorrichtung bzw. diesem Verfahren ist jedoch, daß sich mit zunehmender Betriebszeit des Reaktors sowohl an der Behälterinnenwandung als auch auf der Oberfläche der sich bewegenden Einbauten eine harte Schicht ablagert, welche durch die im Reaktor befindlichen Feststoffe gebildet wird. Diese extrem harte und zähe Schicht kann praktisch nur mit bergmännischen Mitteln abgebaut werden.

Betriebserfahrungen mit vorgenannten Vorrichtungen bzw. Verfahren haben gezeigt, daß ein gleichmäßiges Zerstäubungsbild des eingesprühten Wassers und eine gleichmäßige Verteilung der Feststoffe im Verhältnis zur Rauchgasmenge nicht erzielbar ist. Aufgrund der sich daraus ergebenden ungleichmäßigen und ineffektiven Vermischung von Rauchgas und Ad-/Absorbens ist es unumgänglich, daß nasse Zonen zu Anbackungen führen und trockene Zonen unbefriedigend absorbieren.

Schließlich ist aus der EP-A-0 342 559 eine Vorrichtung zum Abscheiden von Stäuben und/oder sauren Schadstoffen aus Gasen sowie ein Gliederkopf für eine derartige Vorrichtung bekannt, wobei im unteren und oberen Bereich des Reaktorgefässes ein um eine vertikale Achse rotierend antreibbarer Gliederkopf angeordnet ist. Am Gliederkopf bzw. an dessen Nabe sind mehrere kettenförmige Glieder angeordnet, die sich bei einer Rotation des Gliederkopfes bis fast an die Wandung erstrecken. Hierdurch kann eine Krustenbildung an der Wandung im Bereich der Glieder vermieden werden. Im Reaktorgefäß wird der Gasstrom mittels entsprechender Leitwandungen mehrfach umgelenkt.

Ausgehend von diesem Stand der Technik liegt der vorliegenden Erfindung die Aufgabe zugrunde, eine Vorrichtung zur Reinigung von Rauchgas, insbesondere zur trockenen Reinigung von Rauchgas, zu schaffen, welche einen hohen Reinigungswirkungsgrad aufweist, bei der wesentliche Beeinträchtigungen der Funktion durch Ablagerungen an der Behälterinnenwandung oder auf sich bewegenden Teilen vermieden werden und welche gleichzeitig eine flexible Bauweise ermöglicht.

Die Erfindung löst diese Aufgabe mit den Merkmalen des Patentanspruchs 1.

Die Erfindung beruht auf der Erkenntnis, daß durch das Vorsehen flexibler Verwirbelungselemente, welche von den bewegbaren Einbauten umfaßt sind, die Bildung von störenden Schichten von vornherein vermieden bzw. stark reduziert wird und dann durch eine Formänderung der flexiblen Verwirbelungselemente auf einfache Weise beseitigt werden können.

Des Weiteren kann eine gegebenenfalls an der Innenwandung des Behälters entstehende Schicht die Funktion der Vorrichtung nie so weit beeinträchtigen, daß eine Bewegung der bewegbaren Einbauten in wesentlichem Maß beeinträchtigt wird, wie dies beispielsweise bei der Vorrichtung gemäß der EP-B-0 203 430 der Fall ist, wenn die rotierende Schnecke mit einer sich an die Behälterinnenwandung entstehenden Schicht in Berührung kommt.

Das Entstehen von Ablagerungsschichten auf den flexiblen Verwirbelungselementen kann beispielsweise dadurch verhindert werden, daß in bestimmten zeitlichen Abständen eine Änderung der Bewegungsgeschwindigkeit der Verwirbelungselemente vorgenommen wird, so daß sich die Form der flexiblen Elemente verändert und hierdurch gegebenenfalls bereits entstandene dünne Ablagerungsschichten abgesprengt werden.

Infolge der einen oder mehreren senkrecht zur Längsachse des Behälters angeordneten Wellen (ob bei vertikaler oder horizontaler Anordnung des Behälters) ergibt sich der Vorteil, daß ein modularer Aufbau des Behälters möglich ist. Je nach gewünschter Reinungsleistung bzw. gewünschter Reinheit des gereinigten Gases kann somit eine erforderliche Anzahl von Modulen zu einem Behälter kombiniert werden. Dies reduziert die Kosten bei der Planung und beim Bau einer Rauchgasreinigungsanlage erheblich. Des weiteren sind nachträgliche Änderungen einer bestehenden Anlage auf einfache und kostengünstige Weise möglich.

Bei der bevorzugten Ausführungsform der Erfindung sind die flexiblen Verwirbelungselemente als Ketten oder Seile ausgebildet, die an einer oder mehreren rotierbar angetriebenen Wellen angeordnet sind. Hierdurch ergibt sich der Vorteil eines mechanisch einfachen und kostengünstigen Aufbaus, wobei insbesondere die Ausbildung der Verwirbelungselemente als Ketten dazu führt, daß bei einer Änderung der Rotationsrichtung oder der Rotationsgeschwindigkeit eine Veränderung der Lage der Kettenglieder gegeneinander und gegen die Welle erfolgt, so daß bereits entstandene Ablagerungsschichten abgesprengt bzw. abgerieben werden.

Zudem ergibt sich der Vorteil, daß an der Innenwandung des Behälters entstehende Ablagerungsschichten von den Kettengliedern immer wieder abgeschlagen werden, sobald diese Schichten so dick werden, daß sie mit den Kettenenden in Berührung gelangen.

Die Erfindung bietet somit den Vorteil einer selbsttätigen Reinigung sowohl der flexiblen Verwirbelungselemente als auch der Behälterinnenwandung.

Die Rotation der flexiblen Verwirbelungselemente erfolgt mit einer solchen Geschwindigkeit, daß durch die hieraus resultierende Verwirbelung des Rohgas-Ad-/Absorbens-Gemisches die Reaktionsgeschwindigkeit und damit der Reinigungswirkungsgrad aufgrund der sich ergebenden hohen Relativgeschwindigkeiten zwischen den Ad-/Absorbenspartikel und dem Rohgas verbessert wird. Im Gegensatz zu den starren bewegten Einbauten gemäß der EP-B-0 203 430 dienen die flexiblen Verwirbelungselemente der erfindungsgemäßen Vorrichtung in erster Linie dazu, eine ausreichende Verwirbelung des Rohgas-Ad-/Absorbens-Gemisches zu erreichen. Selbstverständlich kann durch die entsprechende Wahl der Rotationsgeschwindigkeit der flexiblen Verwirbelungselemente und der hierdurch verursachten Verlängerung des Wegs der Ad-/Absorbenspartikel im zu reinigenden Rohgas auch in gewissen Grenzen das Verhältnis der Verweilzeit des Ad-/Absorbens zur Verweilzeit des Gases im Reaktor gesteuert werden.

Des Weiteren ergibt sich der Vorteil einer geringen Druckdifferenz zwischen Gaszuführ- und Gasabführseite des Behälters, da keinerlei feste Einbauten erforderlich sind, die einen Druckabfall mit sich bringen.

Des Weiteren ist durch die Verwendung von flexiblen Verwirbelungselementen eine hohe Beladung des Rauchgases mit Ad-/Absorbens möglich, da durch eine hohe Rotations- bzw. Bewegungsgeschwindigkeit der Verwirbelungselemente ein hoher Verwirbelungsgrad erreicht wird und eine Bildung von Ablagerungsschichten innerhalb des Behälters nicht zu befürchten ist. Wegen des hohen Durchsatzes von staubförmigem Feststoff kann eine hohe Beladung mit rückgeführtem, d.h. nur noch teilweise adsorptionsfähigem bzw. absorbtionsfähigem Ad-/Absorbens erfolgen, wobei das stöchiometrische Verhältnis des noch aktiven Teil des Ad-/Absorbens zur Menge der zu adsorbierenden bzw. absorbierenden Stoffe wegen der hohen Verwirbelung nahe an Eins liegen kann, vorzugsweise im Bereich zwischen 1,0 und 1,5. Hierdurch ergibt sich der Vorteil einer optimalen Ausnutzung des Ad-/Absorbens, da dieses relativ lange Zeit innerhalb eines Kreislaufs gehalten werden kann.

Durch die hohen Rotations- bzw. Bewegungsgeschwindigkeiten der flexiblen Verwirbelungselemente kommt es zusätzlich zu dem durch das Aufeinandertreffen von Ad-/Absorbenspartikel untereinander bewirkten Abrieb zu einem Zerschlagen von größeren Ad-/Absorbenspartikel. Zusätzlich zur Befreiung von Ad-/Absorbenspartikeln von hinsichtlich der gewünschten Adsorption bzw. Absorption inaktiven Oberflächenschichten ist somit die Erzeugung neuer aktiver Oberflächen möglich.

Schließlich ergibt sich bei der erfindungsgemäßen Vorrichtung der Vorteil einer einfachen Demontierbarkeit der bewegbaren Einbauten, da beispielsweise die Wellen mittels Flansche geringen Durchmessers am Behälter befestigt werden können, so daß nach der Demontage eines Flansches die Welle samt der flexiblen Verwirbelungselemente entnommen werden kann. Aufgrund der Flexibilität der Verwirbelungselemente ist hierfür nur eine Öffnung relativ geringen Ausmaßes und damit ein Flansch geringen Durchmessers erforderlich.

Schließlich ergibt sich aufgrund des Fehlens starrer bewegter Einbauten der Vorteil einer guten Begehbarkeit bzw. Zugänglichkeit des Behälters im Stillstand, da die flexiblen Einbauten unter dem Einwirken der Schwerkraft nach unten hängen und weitgehend Raum für eine gute Begehbarkeit bzw. Zugänglichkeit lassen. Reparaturen innerhalb des Behälters oder ein Austausch der flexiblen Elemente sind somit auf einfache Weise möglich.

Da im Stillstand der Anlage die flexiblen Verwirbelungselemente die Durchgängigkeit der Vorrichtung für das Rohgas nicht blokkieren können, ergibt sich des weiteren eine Betriebssicherheit auch bei Stillstand der Verwirbelungselemente, wenn auch bei geringerem Wirkungsgrad.

Die Ausbildung der flexiblen Verwirbelungselemente als Ketten oder Seile führt zu dem Vorteil preisgünstiger Ersatz-Verschleißteile.

In einer Ausführungsform der Erfindung sind die flexiblen Verwirbelungselemente entlang einer Schraubenlinie am Umfang einer oder mehrerer Wellen angeordnet. Hierdurch ergibt sich der Vorteil einer in gewissem Umfang erzeugbaren Strömungskomponente in Förderrichtung der bei Rotation der Welle entstehenden Schnecke. Selbstverständlich können an einer Welle auch mehrere Abschnitte solche Schrauben vorgesehen sein, deren Förderrichtung auch gegenläufig sein kann.

Bei der bevorzugten Ausführungsform der Erfindung sind die flexiblen Verwirbelungselemente an einer oder mehreren Wellen jeweils in axialer Richtung der Wellen aufgeteilt in mehreren Gruppen vorgesehen, wobei vorzugsweise die Gruppen jeder Welle in jeweils gleichen axialen Abschnitten zwischen zwei senkrecht zu den Wellen liegenden Ebenen vorgesehen sind.

Der Behälter kann bei der Vorrichtung nach der Erfindung sowohl liegend als auch stehend eingesetzt werden, wodurch die Vorrichtung einem vorhandenen Platzbedarf sehr flexibel angepaßt werden kann.

Der Behälter kann einen im wesentlichen rechteckigen Querschnitt aufweisen, wobei die parallel zu den Wellen liegenden Wandungen des Behälters Innenseiten aufweisen, die aus mehreren teilzylindrischen Bereichen bestehen. Jede Welle ist dabei vorzugsweise im wesentlichen in der Achse eines Teilzylinders vorgesehen. Hierdurch ergibt sich eine verbesserte Verwirbelung des Gas-Ad-/Absorbens-Gemisches. Durch die Ausbildung der Innenwandung in Form mehrerer teilzylindrischer Bereiche wird gegenüber einem rein zylindrischen Aufbau die Gefahr einer quasi-laminaren Strömung des Gemisches vermieden.

Um zu vermeiden, daß an den Innenseiten der zu den Wellen senkrechten Wandungen des Behälters keine oder nur eine geringe Verwirbelung des Gemisches erfolgt, können an diesen Innenseiten Strömungsleitelemente vorgesehen sein oder Bereiche der Innenseiten entsprechend ausgeformt sein. In einer einfachen Ausführungsform können diese Strömungsleitelemente wiederum als kreiszylindrische Wandungen ausgebildet sein, die koaxial zu den Wellen angeordnet sind.

In der bevorzugten Ausführungsform der Erfindung ist für das Rohgas und das Ad-/Absorbens wenigstens je eine Zuführöffnung vorgesehen. Selbstverständlich kann jedoch auch das Mischen des Ad-/Absorbens mit dem Rohgas auch an einer dem Behälter vorgelagerten Stelle erfolgen.

In der Ausführungsform der Erfindung mit stehendem Behälter kann die Reinigung des Gases selbstverständlich im Gleichstrom- oder Gegenstromprinzip erfolgen, wobei die Strömungsrichtung des Gases jeweils entweder von unten nach oben oder umgekehrt verlaufen kann. Die Zuführöffnungen für das Ad-/Absorbens und die Zufuhr bzw. Abfuhr des Gases sind hierzu in entsprechender Weise vorzusehen.

In der Ausführungsform der Erfindung mit liegendem Behälter kommt im wesentlichen nur die Reinigung im Gleichstromprinzip in Frage, da durch den Gasstrom eine Beförderung der Ad-/Absorbenspartikel erfolgt.

In der bevorzugten Ausführungsform der Erfindung ist in einem bodenseitigen Bereich des Behälters eine Sammelvorrichtung für das Ad-/Absorbens vorgesehen, welche vorzugsweise einen Förderer aufweist, der sich über die gesamte Länge des bodenseitigen Bereichs des Behälters oder über einen der Gasabführseite benachbarten bodenseitigen Bereich erstreckt. Bei Bedarf kann der Förderer teilweise mittels eines oder mehrerer Abdeckbleche abgedeckt sein.

Die Sammelvorrichtung ist dabei vorzugsweise so ausgebildet, daß ein vorbestimmter Teil des Ad-/Absorbens dem Behälter in Form eines Kreislaufs wieder zuführbar ist, wobei das im Sammelschacht befindliche Ad-/Absorbens zur Aufrechterhaltung der Druckdifferenz zwischen der Gaszuführseite und der Gasabführseite des Behälters dient. Hierdurch wird vermieden, daß Gas über den externen Zuführweg des Ad-/Absorbens und die Sammelvorrichtung in unmittelbarer Nähe der Gasabführöffnung in den Behälter gelangt, ohne den korrekten "Reinigungsweg" durchlaufen zu haben.

Am Behälter der Vorrichtung nach der Erfindung ist die Zuführöffnung einer Ad-/Absorbenszuführvorrichtung vorgesehen. Durch diese Ad-/Absorbenszuführvorrichtung wird die erforderliche Menge Ad-/Absorbens in den Behälter eingebracht und der Teil des Ad-/Absorbens, der von der Sammelvorrichtung endgültig zur Entsorgung abgeführt wird, in Form frischen, unverbrauchten Ad-/Absorbens ersetzt.

Gleichzeitig kann die Ad-/Absorbenszuführvorrichtung eine Einrichtung zur Beimischung von Wasser bis zu einem vorbestimmten Feuchtegehalt umfassen, wodurch eine Reaktivierung des infolge des letzten Durchlaufs durch den Behälter getrockneten Ad-/Absorbens erreicht wird. Dabei kann es zum einen zu einer Reaktivierung der bereits reagierten Oberflächen der Ad-/Absorbenspartikel kommen und zum anderen wird das Wasser von den Ad-/Absorbenspartikeln infolge Kapillarwirkung auch ins Partikelinnere gesaugt, so daß es aufgrund der plötzlichen Aufheizung nach dem Eintritt in den Behälterinnenraum zu einer plötzlichen Verdampfung des Wassers kommt. Hierdurch werden die Partikel aufgesprengt ("Popcorn-Effekt") und so eine Vergrößerung der adsorbierenden bzw. absorbierenden Oberfläche erreicht.

Durch das Zusetzen von Wasser direkt in das Ad-/Absorbens, bevor dieses in den Behälterinnenraum geleitet wird, ergibt sich zudem der Vorteil, daß eine relativ hohe Feuchtigkeitsmenge in den Behälter einbringbar ist, ohne daß nach außen hin eine merkbare Stoffeuchte auftritt. Die makroskopische Struktur des im Kreislauf befindlichen Ad-/Absorbens bleibt unverändert trocken und feinstaubförmig, d.h., das Ad-/Absorbens bleibt auf- bzw. verwirbelbar wie trockener Staub. Gleiches gilt dann selbstverständlich für die entstehenden aggressiven wässrigen Säuren. Auf diese Weise kann somit weitgehend vermieden werden, daß die Innenwandungen des Behälters bzw. die bewegbaren Einbauten durch die entstehenden aggressiven Substanzen angegriffen werden. Zwar ist nicht ausgeschlossen, daß sich an den flexiblen Verwirbelungselementen im Strömungsschatten Schichten des Ad-/Absorbens ansetzen können. Dies wirkt sich durch die Ausbildung der flexiblen Verwirbelungselemente jedoch nicht nachteilig aus.

Diese Verfahrensweise des Beimischens von Wasser in das Ad-/Absorbens vor dessen Zuführen in den Behälter und die hierfür notwendigen Vorrichtungen können selbstverständlich auch in Kombination mit bekannten trockenen Rauchgasreinigungsverfahren und -vorrichtungen verwendet werden. Selbstverständlich kann in Verbindung mit den bekannten Behältern nicht der Vorteil eines hohen Reinigungswirkungsgrades durch den mit dem erfindungsgemäßen Behälter möglichen hohen und effektiven Durchsatz von Ad-/Absorbens erreicht werden.

Wird als Ad-/Absorbens Kalkhydrat (Ca(OH)₂) verwendet, so kann anstelle einer Einrichtung zur Beimischung von Wasser eine Einrichtung zur Beimischung von Kalkmilch vorgesehen sein. Mit anderen Worten, die erforderliche Zugabe von frischem Ad-/Absorbens in Form von trockenem Kalkhydrat und die separate Zugabe von Wasser kann dadurch ersetzt werden, daß in einem einzigen Zugabevorgang Kalkmilch beigegeben wird. Hierdurch reduziert sich zum einen der Aufwand für die Ad-/Absorbenszuführvorrichtung und zum anderen ergibt sich der Vorteil, daß die zuzugebende Kalkmilch aus Branntkalk (CaO) und Wasser hergestellt werden kann. An die Filteranlage muß somit lediglich Branntkalk angeliefert werden (es wird hier davon ausgegangen, daß Wasser ohnehin vor Ort vorhanden ist), wobei die benötigte Menge Branntkalk weitaus geringer ist, als die vergleichbar benötigte Menge Kalkhydrat. Hierdurch ergibt sich eine Reduzierung von Transportkosten.

Zum Anfahren der Vorrichtung ist in diesem Fall erforderlich, daß der Sammelschacht der Sammelvorrichtung vor einer Inbetriebnahme mit staubförmigem Ad-/Absorbens gefüllt wird.

Durch die spezielle Ausbildung der bewegten Einbauten als flexible Einbauten, die einen hohen Durchsatz von Ad-/Absorbens ermöglicht, kann bei der Vorrichtung nach der Erfindung als Ad-/Absorbens auch Calciumsilicathydrat (CaSiOH) bis zu einer Korngröße von 5 mm und mehr verwendet werden. Calciumsilicathydrat fällt in dieser Form als Abfall bei der Gasbetonherstellung an und stellt somit ein sehr kostengünstiges Ad-/Absorbens dar. Wegen der hierbei anfallenden relativ großen Partikel war die Verwendung mit bekannten Vorrichtungen jedoch nicht möglich bzw. wegen der erforderlichen Aufbereitung des Calciumsilicathydrats unrentabel.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine schematische Darstellung einer gesamten Anlage zur Reinigung von Rauchgas;
- Fig. 2: eine Darstellung einer ersten Ausführungsform der Vorrichtung nach der Erfindung im Schnitt (Fig. 2a Längsschnitt; Fig. 2b Querschnitt durch den Behälter);
- Fig. 3: einen Teilschnitt durch die Ad-/Absorbens-Sammelvorrichtung gemäß der Linie I-I in Fig. 2a;
- Fig. 4: eine weitere Ausführungsform der Erfindung mit liegendem Behälter in zwei Längsschnittdarstellungen in zwei zueinander senkrechten Ebenen;
- Fig. 5: eine weitere Ausführungsform der Erfindung mit liegendem Behälter in der Darstellungsform gemäß Fig. 4 und
- Fig. 6: eine weitere vereinfachte Ausführungsform der Erfindung mit liegendem Behälter in einer Darstellungsform gemäß den Figuren 4 und 5.

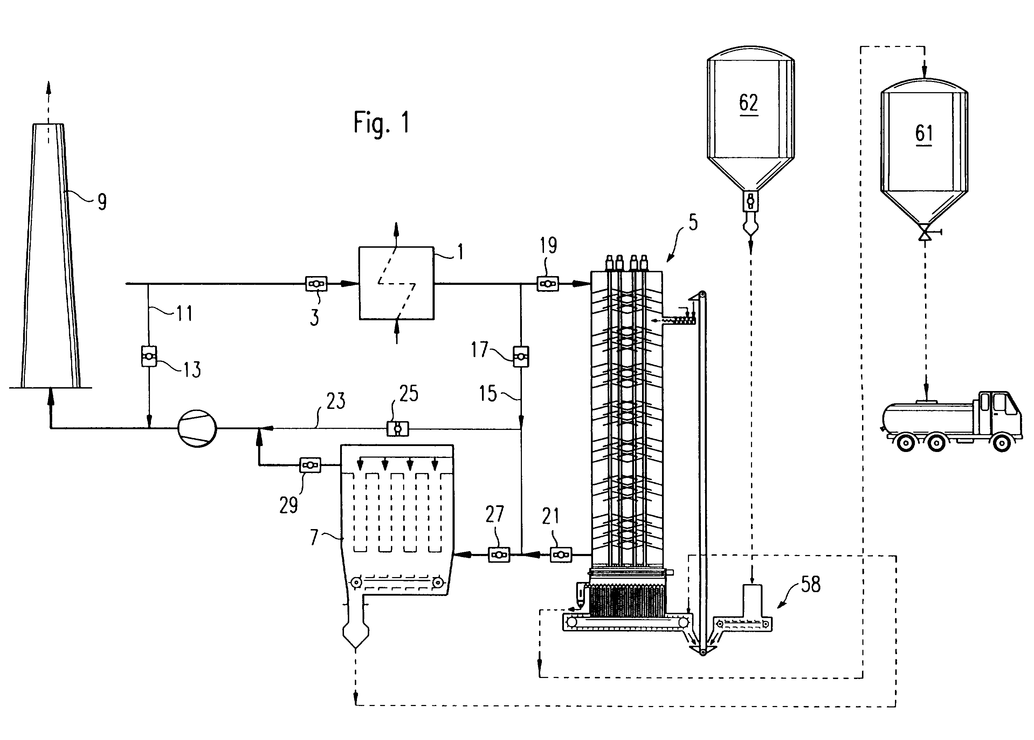

Die in Fig. 1 dargestellte Gesamtanlage zur Reinigung von Rauchgas besteht im wesentlichen aus einem Vorkühler 1, welchem das zu reinigende Rohgas in Pfeilrichtung über ein Klappe 3 zugeführt wird, sowie aus der eigentlichen Vorrichtung 5 zur Reinigung des Rauchgases, welcher ein Feststoffabscheider 7 nachgeschaltet ist. Das gereinigte Rauchgas wird dann mittels eines Kamins 9 abgegeben. Selbstverständlich kann auch durch eine Parallelschaltung mehrerer Vorrichtungen 5 die Reinigungsleistung erhöht bzw. durch eine Reihenschaltung mehrerer Vorrichtungen 5 die Reinigung der Gase verbessert werden.

Der Weg des Gases durch die Anlage im Normalbetrieb ist in Fig. 1 durch die fett ausgezogenen Linien und Pfeile dargestellt.

Die dünn ausgezogenen Linien stellen Wege dar, die die Betriebssicherheit im Störfall einer oder mehrerer Komponenten gewährleisten. So handelt es sich bei der Leitung 11 und dem zugehörigen Klappe 13 um einen Not-Bypass, mit welchem die gesamte Anlage überbrückt und die Rohgase direkt dem Kamin 9 zugeführt werden können.

Mittels der Leitung 15 und dem zugehörigen Klappe 17 kann in Verbindung mit einer entsprechenden Ansteuerung der Klappen 19 und 21 eine Überbrückung der Vorrichtung 5 vorgenommen werden.

Schließlich kann mittels der Leitung 23 und einer entsprechenden Ansteuerung der Klappen 25, 27 und 29 eine Überbrückung des Feststoffabscheiders 7 erfolgen.

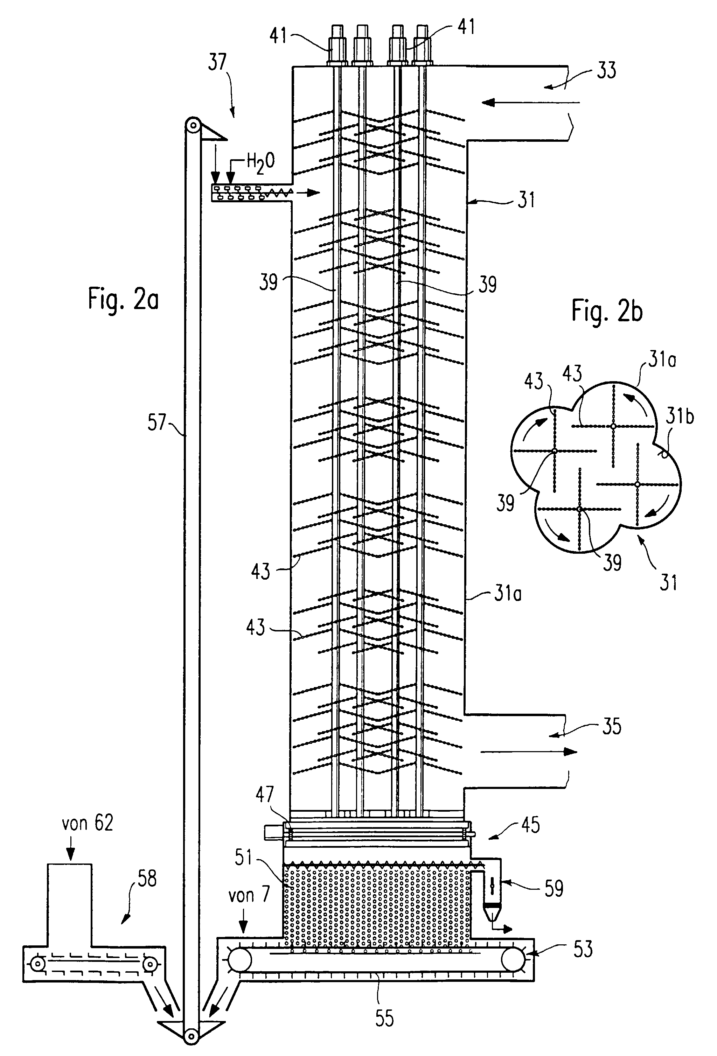

Die Vorrichtung 5, die in Fig. 2a dargestellt ist, umfaßt einen Behälter 31, welchem das Rohgas in Pfeilrichtung über eine Zuführöffnung 33 zugeführt wird. Das gereinigte Rohgas wird über eine Abführöffnung 35 im unteren Bereich des Behälters 31 abgeführt und dem Feststoffabscheider 7 (Fig. 1) zugeführt, der beispielsweise als Gewebefilter ausgebildet sein kann. Dem Behälter 31 wird über eine Ad-/Absorbenszuführvorrichtung 37 trockenes bzw. quasi-trockenes staub- bzw. pulverförmiges Ad-/Absorbens zugeführt.

Da die Adsorption bzw. Absorption von Schadstoffen im Rohgas durch die Ad-/Absorbenspartikel verbessert wird, wenn diese eine gewisse Feuchte aufweisen, wird in der Ad-/Absorbenszuführvorrichtung 37 unter Mischen des Ad-/Absorbens Wasser zugegeben, bis ein vorbestimmter Feuchtegehalt erreicht ist. Dies kann selbstverständlich selbsttätig in Form eines geschlossenen Regelkreises erfolgen, wobei der Feuchtegehalt abhängig von bestimmten Parametern, beispielsweise der Temperatur des zugeführten Rohgases, gewählt werden kann. Auf diese Weise kann der Feuchtegehalt des Ad-/Absorbens vor dem Zuführen in das Innere des Behälters 31 beispielsweise bis zur Grenze des Vorliegens einer staubförmigen Struktur erhöht werden. Das Ad-/Absorbens liegt dabei jedoch noch immer in staub- bzw. pulverförmiger Form vor, so daß nach wie vor eine hohe aktive Oberfläche für die Reinigung verfügbar ist.

Da zur Steigerung des Wirkungsgrades eine hohe Relativgeschwindigkeit zwischen den Ad-/Absorbenspartikeln und dem Rohgas wünschenswert ist, sind in der Längsachse des Behälters 31 mehrere, im gezeigten Beispiel vier, Wellen 39 vorgesehen, welche parallel zur Längsachse des Behälters verlaufen. Die Wellen sind mittels Elektromotoren 41, die an der Oberseite des Behälters 31 angeordnet sind, rotierend angetrieben.

Zur Verwirbelung des Gas-Ad-/Absorbens-Gemisches sind im Behälterinneren an den Wellen 39 Ketten 43 angeordnet. Diese hängen unter Einwirkung der Schwerkraft im Stillstand der Wellen nach unten und erstrecken sich unter Einwirkung der Zentrifugalkraft bei einer Rotation der Wellen nach außen. Selbstverständlich können anstelle von Ketten auch beliebige andere flexible Verwirbelungselemente, beispielsweise Seile, verwendet werden. Ketten bieten jedoch den Vorteil, daß infolge der Durchbrüche in den Kettengliedern eine intensivere Verwirbelung erreichbar ist. An den flexiblen Verwirbelungselementen können in nicht dargestellter Weise auch kleinere starre oder flexible Elemente zur Erhöhung des Luftwiderstands vorgesehen sein.

Wie in Fig. 2 dargestellt, kann der Behälter 31 eine Wandung 31a aufweisen, deren Innenwandung mehrere teilzylindrische Bereiche 31b aufweist. Die vier Wellen sind dann, wie in Fig. 2b dargestellt, vorzugsweise so angeordnet, daß diese jeweils in der Achse der teilzylindrischen Bereiche 31b liegen.

Hierdurch wird zum einen gewährleistet, daß das Gas infolge der Verwirbelung durch die Verwirbelungselemente 43 jeder Welle von der Innenwandung der Bereiche 31b wieder in Richtung Behältermitte geleitet werden. Zur Verbesserung der Verwirbelung können jeweils benachbarte Wellen 39, wie in Fig. 2b dargestellt, mit entgegengesetztem Drehsinn angetrieben sein. Die als Ketten ausgebildeten Verwirbelungselemente 43 sind dann vorzugsweise so lang gewählt, daß diese bei einer vorbestimmten Drehzahl mit ihren äußeren Enden einen Außenkreis beschreiben, dessen Durchmesser nur geringfügig kleiner ist, als der Innendurchmesser der teilzylindrischen Bereiche 31b. Lagern sich im Verlauf des Betriebs der Vorrichtung Ad-/Absorbensschichten an der Innenwandung des Behälters 31 an, so werden diese von den Kettenenden abgeschlagen, sobald die Schichtdicke einen bestimmten Wert überschreitet. In jedem Fall ist gegenüber der Verwendung starrer Verwirbelungselemente erreicht, daß auch bei größeren Schichtdicken die für die Bewegung der Wellen 39 erforderliche Antriebsleistung im wesentlichen unverändert bleibt.

Um das Anlagern dickerer Schichten an den Verwirbelungselementen 43 zu vermeiden, kann, wie bereits erwähnt, in bestimmten zeitlichen Abständen die Drehrichtung jeder Welle 39 umgekehrt oder die Rotationsgeschwindigkeit verändert werden. Hierdurch ergibt sich eine Formänderung der flexiblen Verwirbelungselemente 43, wodurch die gegebenenfalls angelagerten Schichten abplatzen.

Wie in Fig. 2b angedeutet, können die Wellen 39 hinsichtlich ihrer Rotationsbewegung synchronisiert angetrieben werden, so daß die Ketten 43 im Bereich der Behältermitte nicht aneinanderschlagen. Zu Reinigungszwecken kann diese Synchronisation auch kurzfristig aufgehoben werden, so daß die Ketten sich durch gegenseitiges Aneinanderschlagen reinigen.

In axialer Richtung der Wellen 39 können die Ketten beispielsweise gleichmäßig verteilt angeordnet sein, wobei zur Vermeidung von Unwuchten bzw. von Verbiegungen der Wellen eine symmetrische Anordnung von Ketten in einer zur Welle senkrechten Ebene vorzuziehen ist. Wie in Fig. 2b dargestellt, können beispielsweise in einer Ebene jeweils 4 Ketten vorgesehen sein. Die Ketten 43 können zur Erzeugung gewünschter Verwirbelungseffekte auch verschieden lang ausgebildet sein.

Die Ketten können, wie in Fig. 2a dargestellt, in axialer Richtung auch in Gruppen angeordnet sein, wobei Zonen hoher Verwirbelung mit Beruhigungszonen abwechseln. Insbesondere in den Übergangsschichten entstehen dann hohe Relativgeschwindigkeiten zwischen den Ad-/Absorbenspartikeln und dem Gas.

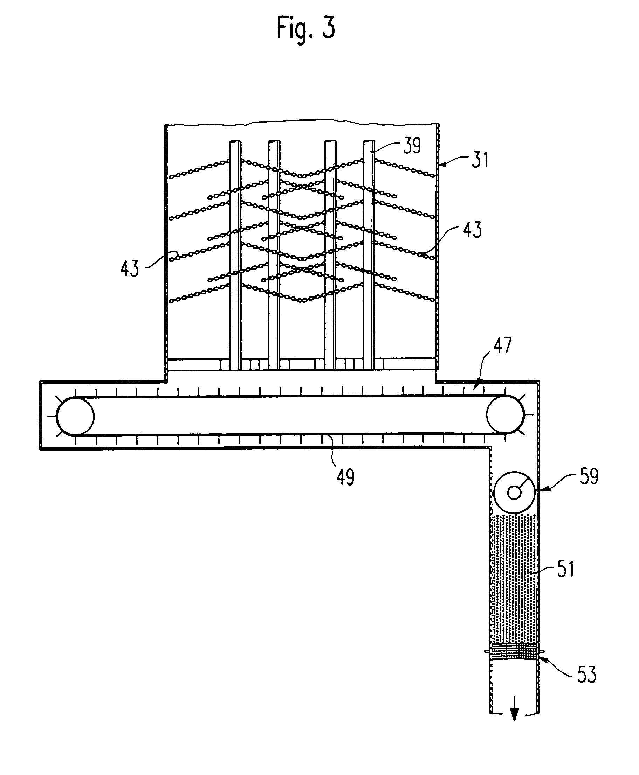

Am bodenseitigen Ende des Behälters 31 ist eine Sammelvorrichtung 45 für das Ad-/Absorbens vorgesehen, welche, wie aus Fig. 3 deutlicher erkennbar, eine Fördervorrichtung 47 umfaßt, welche das sich auf einer Förderkette 49 ansammelnde (teilweise mit Schadstoffen beladene) Ad-/Absorbens einem Sammelschacht 51 zuführt. Die Förderkette 49 erstreckt sich dabei vorzugsweise über die gesamte bodenseitige Fläche des Behälters 31.

Am bodenseitigen Ende des Sammelschachts 51 ist eine weitere Fördervorrichtung 53 vorgesehen, welche mittels einer weiteren Förderkette 55 das Ad-/Absorbens erneut der Ad-/Absorbenszuführvorrichtung 37 zuführt. Letztere kann hierzu beispielsweise eine als Becherwerk ausgebildete Förderstrecke 57 umfassen. Der Förderstrecke 57 wird auch das mittels des Feststoffabscheiders 7 (Fig. 1) abgeschiedene staubförmige Produkt, das weitgehend aus Ad-/Absorbens besteht, zugeführt. Hierdurch ergibt sich eine optimale Ausnützung des Ad-/Absorbens.

Des weiteren umfaßt die Ad-/Absorbenszuführvorrichtung 37 eine Zuführvorrichtung 58 für Frischgut, das heißt frisches Ad-/Absorbens. Diese Frischgutzuführvorrichtung kann, wie in den Figuren 1 und 2a dargestellt, das Frischgut an der Unterseite der Förderstrecke 57 aus einem Ad-/Absorbenssilo 62 (Fig. 1) zuführen. Selbstverständlich kann das Zuführen von Frischgut jedoch auch an jeder Stelle zwischen der Ad-/Absorbenszuführöffnung und der Ad-/Absorbenssammelvorrichtung 45 erfolgen. Die dem bereits im Kreislauf befindlichen Ad-/Absorbens zugeführte Menge an Frischgut kann abhängig von bestimmten Parametern, z.B. der zu ad-/absorbierenden Schadstoffmenge, gesteuert oder geregelt werden.

Zusätzlich wird mittels der Ad-/Absorbenszuführvorrichtung 37 dem im Kreislauf befindlichen Ad-/Absorbens in bereits oben beschriebener Weise Wasser bis zu einem bestimmten Feuchtegehalt zugeführt.

Eine der eingetragenen und abgeschiedenen Menge entsprechender Anteil der entstehenden Reaktionsprodukte wird aus dem Ad-/Absorbenskreislauf aus dem Sammelschacht 51, wie in Fig. 3 dargestellt, mittels einer Abführvorrichtung 59, die beispielsweise eine Förderschnecke umfassen kann, ausgeschleust und dem Reststoffsilo 61 (Fig. 1) zur Entsorgung zugeführt. Die im Kreislauf befindliche Ad-/Absorbensmenge wird so im wesentlichen konstant gehalten.

Durch die im Sammelschacht 51 befindliche Ad-/Absorbensschicht wird gleichzeitig ein Aufrechterhalten der Druckdifferenz zwischen der Zuführöffnung 33 und der Abführöffnung 35 für das Gas erreicht und auf diese Weise verhindert, daß das Rohgas über die Ad-/Absorbenszuführvorrichtung 37 und den Sammelschacht 51 in Richtung auf die Abführöffnung 35 gelangt, ohne die korrekte Reinigungsprozedur durchlaufen zu haben.

Die vorstehende Ausbildung der Ad-/Absorbenszuführvorrichtung 37 und der Ad-/Absorbenssammelvorrichtung 45 gewährleistet den gewünschten hohen Ad-/Absorbensdurchsatz durch den Behälter 31. Diese Elemente können selbstverständlich auch mit bekannten Behältern 31 verwendet werden.

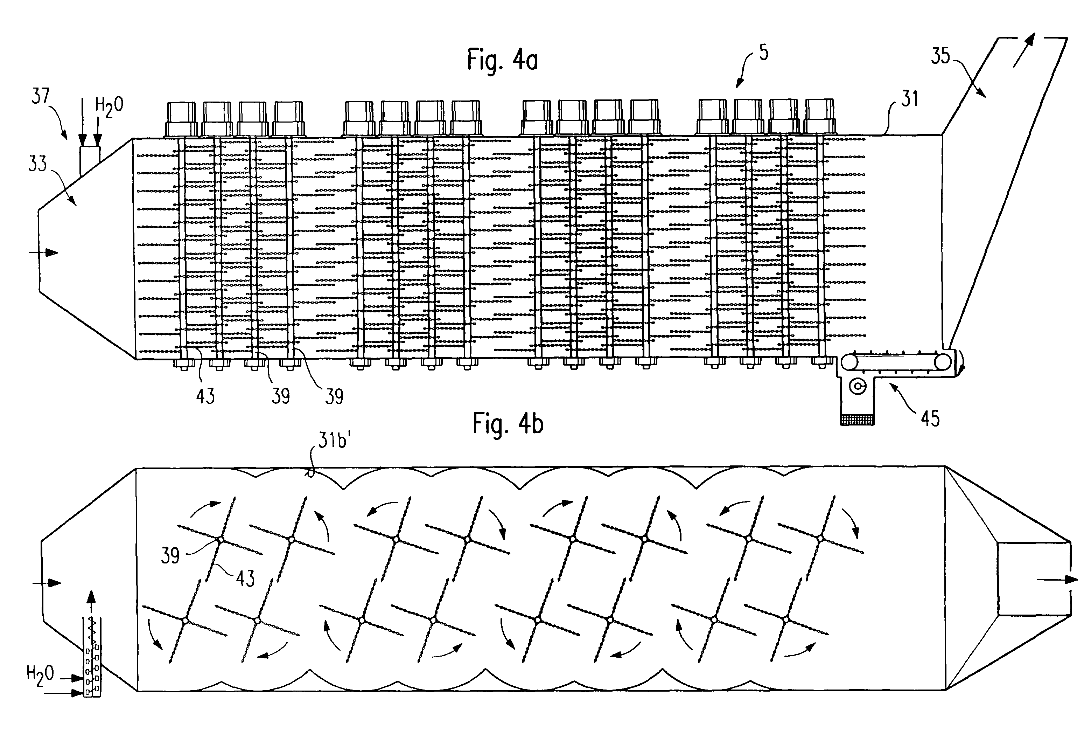

Insgesamt betrachtet, ergibt sich bei der Vorrichtung nach der Erfindung nicht nur eine Verbesserung des Reinigungswirkungsgrads bei gleichzeitig einfachem Aufbau der Vorrichtung, sondern auch eine Verbesserung der Ausnützung des Ad-/Absorbens durch die Reaktivierung in der Ad-/Absorbenszuführvorrichtung. Jedes Ad-/Absorbenspartikel durchläuft mehrfach den Behälter 31 und trägt mehrfach zu einer Reinigung des Gases bei. Das Ad-/Absorbens verbleibt somit - bei entsprechender Gesamtmenge von Ad-/Absorbens innerhalb des Kreislaufs - relativ lange im Kreislauf (zwei Tage und mehr), wodurch sich zusätzlich der Vorteil ergibt, daß entstehende Reaktionsprodukte durch den vorhandenen Restsauerstoff im Gas und durch die Feuchte aufoxidiert werden. Beispielsweise wird im Ad-/Absorbens vorhandenes Calciumsulfit (CaSO₃) zu Calciumsulfat (CaSO₄) aufoxidiert. Dies geschieht bereits innerhalb des Ad-/Absorbenskreislaufs. Eine nachgeschaltete Stufe zur Aufoxidation des mittels der Abführvorrichtung 59 abgeführten verbrauchten Ad-/Absorbens ist somit nicht erforderlich.
Nachfolgend wird das in Fig. 4a und Fig. 4b dargestellte weitere Ausführungsbeispiel der Erfindung beschrieben, wobei lediglich auf die zu dem Ausführungsbeispiel gemäß den Figuren 2 und 3 bestehenden Unterschiede eingegangen wird. Insbesondere wesentliche Teile der Sammelvorrichtung 45 für das Ad-/Absorbens und die Ad-/Absorbenszuführvorrichtung 37 bleiben dem Grunde nach unverändert.

Wie in Fig. 4a dargestellt, ist der Behälter 31 der Vorrichtung 5 liegend ausgebildet, wobei die Wellen 39 senkrecht zur Längsachse des Behälters in vertikaler Richtung angeordnet sind. Der Antrieb der Wellen verbleibt im wesentlichen unverändert.

Durch die liegende Ausbildung des Behälters 31 ergibt sich jedoch der Vorteil, daß die Lagerung der Wellen, insbesondere auch an der Unterseite, außerhalb des Behälterinnenraums erfolgen kann und somit die Lager vor aggressiven Gasen geschützt sind. Die Zuführöffnung 33 für das Rohgas erweitert sich zunächst bis auf den gesamten Querschnitt des Behälters 31, wodurch eine Reduzierung der Strömungsgeschwindigkeit erreicht wird. Auf diese Weise verbleiben die zu reinigenden Gase innerhalb des Behälters 31, was zu einer Steigerung der Reinigungswirkung beiträgt.

Die an den Wellen 39 angeordneten Ketten 43 sind im wesentlichen in äquidistanten axialen Abständen an den Wellen angeordnet und so über den Umfang der Welle verteilt, daß eine Unwucht vermieden wird. Selbstverständlich können jedoch auch bei dieser Ausführungsform wiederum in jeder Ebene mehrere, beispielsweise vier, Ketten vorgesehen sein, so daß in jeder zur Welle senkrechten Ebene eine Unwucht ausgeschlossen ist.

Wie aus Fig. 4b ersichtlich, sind die zu den Wellen 39 parallelen Innenwandungen des Behälters wiederum mit teilzylinderförmigen Abschnitten 31b' versehen, wodurch sich die bereits oben beschriebenen Vorteile ergeben.

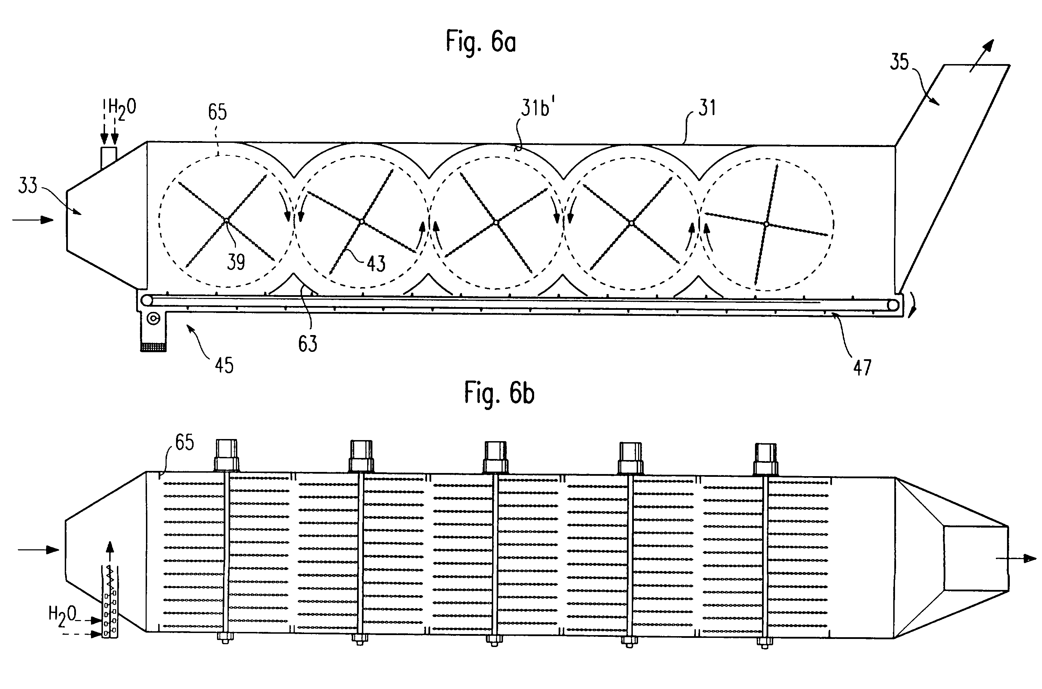

Um zu verhindern, daß sich entlang der zu den Wellen senkrecht verlaufenden Behälterinnenwandungen Beruhigungszonen hinsichtlich der Verwirbelung ausbilden, können an diesen Innenwandungen (wie in Verbindung mit Fig. 6 erläutert) nicht dargestellte Strömungsleitelemente vorgesehen sein, die eine ungestörte Gasströmung in Richtung auf die Gasabführöffnungen 35 verhindern.

In der bodenseitigen Wandung des Behälters 31 ist im Bereich der Gasabführöffnung 35 wiederum die Sammelvorrichtung 45 für das Ad-/Absorbens vorgesehen. Diese umfaßt wiederum eine Fördervorrichtung 47, welche sich über die gesamte Breite des Behälters 31 erstreckt. Im übrigen ist die Sammelvorrichtung 45 unverändert, ebenso wie die Ad-/Absorbenszuführvorrichtung 37. Aus Gründen der Übersichtlichkeit wurde auf die Darstellung des Kreislaufs für das Ad-/Absorbens verzichtet.

Bei dieser Ausführungsform der Erfindung ist im wesentlichen nur ein Betrieb nach dem Gleichstromprinzip möglich.

Bei der Vorrichtung gemäß Fig. 4 setzen sich die zugeführten Ad-/Absorbenspartikel immer wieder an der bodenseitigen Wandung ab und werden erneut aufgewirbelt. Dabei werden die Ad-/Absorbenspartikel vom Gasstrom in Richtung auf die Gasabführöffnung 35 mitgetragen. Da im hinteren Bereich des Behälters 31, d.h., im Bereich der Sammelvorrichtung 45 keine rotierenden Wellen mehr vorgesehen sind, setzen sich die Ad-/Absorbenspartikel bereits zum großen Teil auf der Förderkette der Sammelvorrichtung 45 ab. Diejenigen Partikel, die von der Gasströmung noch mit in Richtung auf die Gasabführöffnung 35 mitgenommen werden, setzen sich infolge der Schwerkraft durch die schräg aufwärts gerichtete Ausbildung des Abführkanals im Laufe der Zeit an der unteren Wandung des Abführkanals ab und rutschen infolge der relativ großen Steilheit dieser Wandung nach unten in Richtung auf die Sammelvorrichtung 45. Auf diese Weise ist gewährleistet, daß der größte Teil des Ad-/Absorbens in die Sammelvorrichtung 45 gelangt. Der bei jeder Ausführungsform vom Gasstrom durch die Gasabführöffnung abgeführte Anteil des Ad-/Absorbens, insbesondere kleinere Ad-/Absorbenspartikel, werden dann über den Feststoffabscheider 7 (Fig. 1) zurückgewonnen.

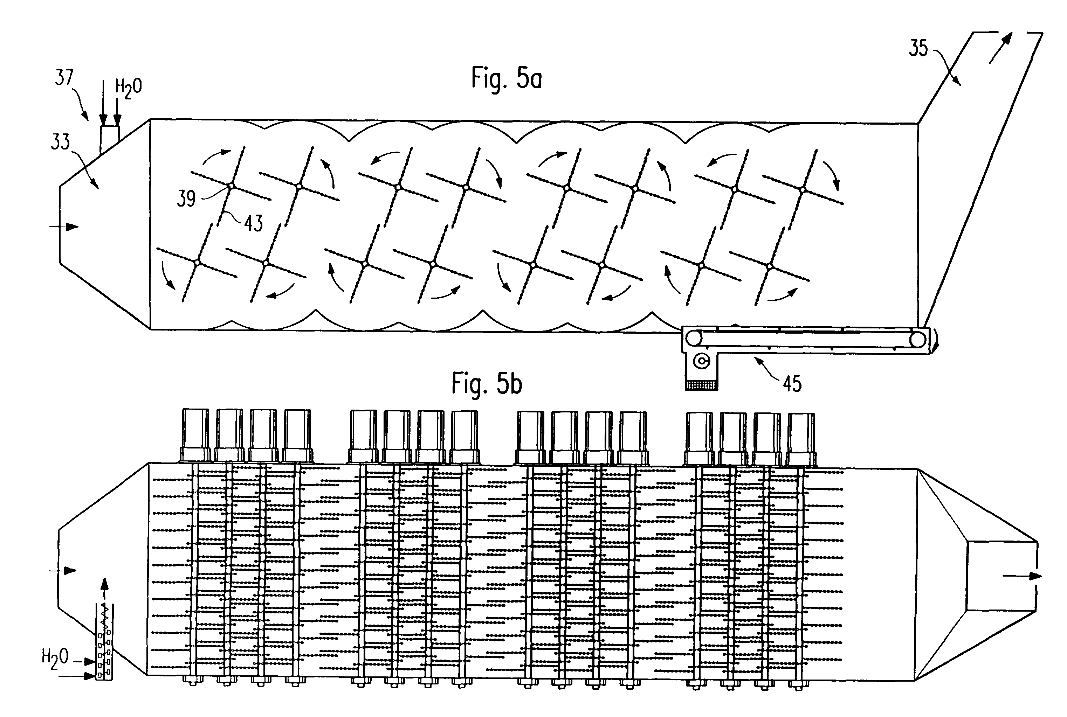

Die Ausführungsform gemäß Fig. 5 unterscheidet sich von der Ausführungsform nach Fig. 4 lediglich dadurch, daß die Wellen 39 horizontal und senkrecht zur Längsachse des Behälters 31 angeordnet sind. Somit kann in praktisch vollem Umfang auf die vorstehenden Ausführungen verwiesen werden.

Wie in Fig. 5a dargestellt, ist die Sammelvorrichtung 45 für das Ad-/Absorbens mit einer längeren Förderkette versehen, welches so angetrieben ist, daß das auf der Förderkette befindliche Ad-/Absorbens in Richtung auf das Behälterende gefördert und von da an der Unterseite der Förderkette in Richtung auf den Sammelschacht gefördert wird. Hierdurch kann erreicht werden, daß die Konzentration der Ad-/Absorbenspartikel im Bereich der Wellen 39, die sich oberhalb der Förderkette befinden, gegenüber der Ad-/Absorbenskonzentration im vorderen Bereich des Behälters 31 verringert. Auf diese Weise reduziert sich auch der Anteil von durch das Gas über die Gasabführöffnung 35 abgeführten Ad-/Absorbenspartikeln.

Durch die horizontale Ausbildung der Wellen 39 wickeln sich die Ketten 43 bei geringer Drehzahl der Wellen, beispielsweise beim Stillsetzen der Vorrichtung, um die Wellen, so daß ein ungehinderter Zugang zum Innenbereich des Behälters 31 möglich ist. Bei höheren Drehzahlen erfolgt jedoch ein Abwickeln der Ketten infolge der Zentrifugalkraft, so daß auch bei dieser Ausführungsform eine optimale Verwirbelung des Gas-Ad-/AbsorbensGemisches sichergestellt ist.

Fig. 6 zeigt eine vereinfachte Ausführungsform der Erfindung bei ebenfalls liegendem Behälter 31. Ebenso wie bei der Ausführungsform gemäß Fig. 5 sind die Wellen 39 wiederum horizontal und senkrecht zur Längsachse des Behälters 31 angeordnet. Im Unterschied zu dieser Ausführungsform ist jedoch nur eine einzige Reihe von Wellen 39 vorgesehen, wobei die Ketten auch nur so lang ausgebildet sind, daß eine Berührung der Ketten untereinander vermieden ist. Demzufolge kann auf eine Synchronisierung der Antriebe für die Wellen 39 verzichtet werden.

Während die obere Wandung des Behälters 31 wiederum die bekannten teilzylindrischen Bereiche aufweist, erstreckt sich über die gesamte untere Innenwandung eine Förderkette der Sammelvorrichtung 45 für das Ad-/Absorbens. Dieses kann, wie in Fig. 6a dargestellt, entweder so angetrieben sein, daß sich die Oberseite der Förderkette in Richtung auf die Gasabführöffnung 35 bewegt, so daß das Ad-/Absorbens zwischen der Unterseite der Förderkette und der Behälterinnenwandung in Richtung auf den Sammelschacht der Vorrichtung 45 gefördert wird. Hierdurch ergibt sich ein relativ rascher Durchlauf des Ad-/Absorbens, welches immer wieder von der Oberseite der Förderkette aufgewirbelt wird.

Die Förderkette kann jedoch auch entgegengesetzt angetrieben werden, so daß das Ad-/Absorbens, das sich auf der Förderkette ablagert, immer wieder in Richtung auf die Gaszuführöffnung 33 bewegt wird. Die Geschwindigkeit der Förderkette muß dann jedoch größer gewählt werden, als die mittlere Bewegungsgeschwindigkeit der Ad-/Absorbenspartikel im Gasstrom. Bei diesem Antrieb der Förderkette kann die Verweildauer der Ad-/Absorbenspartikel im Innenraum des Behälters 31 erhöht werden.

Wie in Fig. 6 dargestellt, können überhalb der Förderkette der Ad-/Absorbenssammelvorrichtung 45 Strömungsleitelemente 63 vorgesehen sein, die in Bereichen zwischen den äußeren Kreisbahnen der Ketten 43 angeordnet sind und eine den kreiszylindrischen Bereichen 31b' der oberen Wandung entsprechende Funktion ausüben.

Des weiteren sind, wie gestrichelt in Fig. 6a angedeutet und auch Fig. 6b ersichtlich, an den seitlichen Innenwandungen des Behälters 31 weitere Strömungsleitelemente 65 vorgesehen, die verhindern, daß Gas nicht oder nur geringfügig verwirbelt entlang dieser Wege von der Zuführöffnung 33 zur Abführöffnung 35 gelangt.

## Patentansprüche

1. Vorrichtung zur Reinigung von Rauchgas mit
a) einem Behälter (31), welchem Rohgas und ein Ad-/Absorbens zur Reinigung des Rohgases über wenigstens eine Zuführöffnung (33) zuführbar ist und aus welchem das gereinigte Gas über wenigstens eine Abführöffnung (35) abführbar ist,
b) wobei in dem Behälter (31) bewegbare Einbauten (39) vorgesehen sind, welche flexible Verwirbelungselemente (43) aufweisen,
**dadurch gekennzeichnet**,
c) daß die flexiblen Verwirbelungselemente (43) an zumindest einer rotierbar angetriebenen Welle (39) angeordnet sind und
d) daß die zumindest eine Welle (39) senkrecht zur Längsachse des Behälters angeordnet ist.

2. Vorrichtung nach Anspruch 1, **dadurch gekennzeichnet**, daß die flexiblen Verwirbelungselemente (43) als Ketten oder Seile ausgebildet sind.

3. Vorrichtung nach Anspruch 1 oder 2, **dadurch gekennzeichnet**, daß die flexiblen Verwirbelungselemente (43) entlang einer Schraubenlinie am Umfang einer oder mehrerer Wellen (39) angeordnet sind.

4. Vorrichtung nach einem der vorhergehenden Ansprüche, **dadurch gekennzeichnet**, daß die flexiblen Verwirbelungselemente (43) an einer oder mehreren Wellen (39) jeweils in axialer Richtung aufgeteilt in mehreren Gruppen vorgesehen sind.

5. Vorrichtung nach Anspruch 4, **dadurch gekennzeichnet**, daß die Gruppen jeder Welle (39) in jeweils gleichen Abschnitten zwischen zwei senkrecht zu den Wellen (39) liegenden Ebenen vorgesehen sind.

6. Vorrichtung nach einem der vorhergehenden Ansprüche, **dadurch gekennzeichnet**, daß die Längsachse des Behälters (31) im wesentlichen vertikal oder horizontal verläuft.

7. Vorrichtung nach einem der vorhergehenden Ansprüche, **dadurch gekennzeichnet**, daß der Behälter (31) einen im wesentlichen rechteckigen Querschnitt aufweist.

8. Vorrichtung nach Anspruch 7, **dadurch gekennzeichnet**, daß die parallel zu den Wellen (39) liegenden Wandungen des Behälters (31) Innenseiten aufweisen, die aus mehreren teilzylindrischen Bereichen (31b) bestehen und daß jede Welle (39) im wesentlichen in der Achse eines Teilzylinders vorgesehen ist.

9. Vorrichtung nach Anspruch 7 oder 8, **dadurch gekennzeichnet**, daß an den Innenseiten der zu den Wellen (39) senkrechten Wandungen des Behälters Strömungsleitelemente vorgesehen sind oder Bereiche der Innenseiten entsprechend ausgebildet sind, welche die Strömung des Gas-Ad-/Absorbens-Gemisches in Richtung Behältermitte ablenken.

10. Vorrichtung nach einem der vorhergehenden Ansprüche, **dadurch gekennzeichnet**, daß für das Rohgas und das Ad-/Absorbens wenigstens je eine Zuführöffnung vorgesehen ist.

11. Vorrichtung nach Anspruch 10, **dadurch gekennzeichnet**, daß die wenigstens eine Zuführöffnung (33) für das Rohgas und die wenigstens eine Öffnung für das Ad-/Absorbens sowie wenigstens eine Abführöffnung (35) für das gereinigte Gas in axialen Endbereichen des Behälters (31) so angeordnet sind, daß die Reinigung des Rohgases im Gleichstrom- oder Gegenstromprinzip erfolgt.

12. Vorrichtung nach einem der vorhergehenden Ansprüche, **dadurch gekennzeichnet,** daß am Behälter (31) eine Sammelvorrichtung (45) für das Ad-/Absorbens vorgesehen ist.

13. Vorrichtung nach Anspruch 12, **dadurch gekennzeichnet**, daß die Sammelvorrichtung (45) bei vertikaler Längsachse des Behälters (31) an der bodenseitigen Behälterstirnseite vorgesehen ist.

14. Vorrichtung nach Anspruch 12, **dadurch gekennzeichnet**, daß die Sammelvorrichtung (45) bei horizontaler Längsachse des Behälters (31) am bodenseitigen Bereich der Behälterwandung vorgesehen ist.

15. Vorrichtung nach Anspruch 14, **dadurch gekennzeichnet**, daß sich ein Förderer (47) der Sammelvorrichtung (45) über die gesamte Länge des bodenseitigen Bereichs der Behälterwandung oder über einen der Gasabführseite benachbarten Bereich erstreckt.

16. Vorrichtung nach Anspruch 15, **dadurch gekennzeichnet**, daß der Förderer (47) der Sammelvorrichtung (45) das Ad-/Absorbens in einen Sammelschacht (51) fördert, aus welchem ein vorbestimmter Teil des Ad-/Absorbens dem Behälter (31) in Form eines Kreislaufs wieder zuführbar ist, wobei das im Sammelschacht befindliche Ad-/Absorbens zur Aufrechterhaltung der Druckdifferenz zwischen der Gaszuführseite und der Gasabführseite des Behälters dient.

17. Vorrichtung nach Anspruch 16, **dadurch gekennzeichnet**, daß im Sammelschacht (51) eine Abführvorrichtung (59) vorgesehen ist, welche einen vorbestimmten Teil des Ad-/Absorbens zur Entsorgung abführt.

18. Vorrichtung nach einem der vorhergehenden Ansprüche, **dadurch gekennzeichnet**, daß am Behälter (31) eine Ad-/Absorbenszuführvorrichtung (37) vorgesehen ist.

19. Vorrichtung nach Anspruch 18, **dadurch gekennzeichnet**, daß die Ad-/Absorbenszuführvorrichtung (37) eine Einrichtung zur Beimischung von Wasser bis zu einem vorbestimmten Feuchtegehalt umfaßt.

## Claims

1. Device for cleaning flue gas, having
a) a container (31) to which crude gas and an adsorbent/absorbent for cleaning the crude gas can be supplied via at least one supply aperture (33), and from which the cleaned gas can be discharged via at least one discharge aperture (35),
b) wherein movable components (39), which have flexible turbulence elements (43), are provided in the container (31),
**characterised in that**
c) the flexible turbulence elements (43) are disposed on at least one rotatably driven shaft (39), and that
d) the shaft (39), of which there is at least one, is disposed perpendicularly to the longitudinal axis of the container.

2. Device according to claim 1, **characterised in that** the flexible turbulence elements (43) are constructed as chains or cables.

3. Device according to claim 1 or 2, **characterised in that** the flexible turbulence elements (43) are disposed along a helical line on the periphery of one or more shafts (39).

4. Device according to one of the preceding claims, **characterised in that** the flexible turbulence elements (43) are provided in a number of groups on one or more shafts (39) in such a way as to be divided up in the axial direction in each case.

5. Device according to claim 4, **characterised in that** the groups on each shaft (39) are provided in identical sections, in each case, between two planes lying perpendicularly to the shafts (39).

6. Device according to one of the preceding claims, **characterised in that** the longitudinal axis of the container (31) extends essentially vertically or horizontally.

7. Device according to one of the preceding claims, **characterised in that** the container (31) has an essentially rectangular cross-section.

8. Device according to claim 7, **characterised in that** the walls of the container (31) which lie parallel to the shafts (39) have inner sides which consists of a number of partially cylindrical regions (31b) and that each shaft (39) is provided essentially in the axis of a partial cylinder.

9. Device according to claim 7 or 8, **characterised in that**, on the inner sides of those walls of the container which are perpendicular to the shafts (39), flow-guiding elements are provided or regions of the inner sides are suitably constructed, which flow-guiding elements or regions deflect the flow of the mixture of gas and adsorbent/absorbent in the direction of the centre of the container.

10. Device according to one of the preceding claims, **characterised in that** at least one supply aperture in each case is provided for the crude gas and for the adsorbent/absorbent.

11. Device according to claim 10, **characterised in that** the supply aperture (33), of which there is at least one, for the crude gas and the aperture, of which there is at least one, for the adsorbent/absorbent, and also at least one discharge aperture (35) for the cleaned gas are disposed in axial end regions of the container (31) in such a way that the cleaning of the crude gas takes place on the uniflow or reverse flow principle.

12. Device according to one of the preceding claims, **characterised in that** a collecting device (45) for the adsorbent/absorbent is provided on the container (31).

13. Device according to claim 12, **characterised in that**, when the longitudinal axis of the container (31) is vertical, the collecting device (45) is provided on that end face of the container which is at the bottom end.

14. Device according to claim 12, **characterised in that**, when the longitudinal axis of the container (31) is horizontal, the collecting device (45) is provided on that region of the container wall which is at the bottom end.

15. Device according to claim 14, **characterised in that** a conveyer (47) belonging to the collecting device (45) extends over the entire length of that region of the container wall which is at the bottom end, or over a region which is adjacent to the gas discharge end.

16. Device according to claim 15, **characterised in that** the conveyer (47) of the collecting device (45) conveys the adsorbent/absorbent into a collecting shaft (51), from which a predetermined portion of the adsorbent/absorbent can be supplied to the container (31) again in the form of a circuit, the adsorbent/absorbent which is located in the collecting shaft serving to maintain the pressure difference between the gas supply end and the gas discharge end of the container.

17. Device according to claim 16, **characterised in that** a discharge device (50), which discharges a predetermined portion of the adsorbent/absorbent for disposal purposes, is provided in the collecting shaft (51).

18. Device according to one of the preceding claims, **characterised in that** an adsorbent/absorbent supply device (37) is provided on the container (31).

19. Device according to claim 18, **characterised in that** the adsorbent/absorbent supply device (37) comprises an arrangement for admixing water until a predetermined moisture content is reached.

## Revendications

1. Dispositif de purification de gaz de fumée, comprenant
a) un récipient (31), auquel peuvent être amenés, par au moins une ouverture d'amenée (33), du gaz brut et un adsorbant/absorbant pour la purification du gaz brut, et à partir duquel le gaz purifié peut être évacué par au moins une ouverture d'évacuation (35),
b) des inserts mobiles (39) qui comportent des éléments flexibles de tourbillonnement (43), prévus dans le récipient (31),
caractérisé en ce que
c) les éléments flexibles de tourbillonnement (43) sont disposés sur au moins un arbre (39) entraîné en rotation, et
d) en ce que ledit au moins un arbre (39) est disposé perpendiculairement par rapport à l'axe longitudinal du récipient.

2. Dispositif selon la revendication 1, caractérisé en ce que les éléments flexibles de tourbillonnement (43) sont en forme de chaînes ou de cordes.

3. Dispositif selon la revendication 1 ou 2, caractérisé en ce que les éléments flexibles de tourbillonnement (43) sont disposés le long d'une hélice sur la circonférence d'un ou de plusieurs arbres (39).

4. Dispositif selon l'une des revendications précédentes, caractérisé en ce que les éléments flexibles de tourbillonnement (43) sont prévus, sur un ou sur plusieurs arbres (39), répartis en plusieurs groupes dans la direction axiale.

5. Dispositif selon la revendication 4, caractérisé en ce que les groupes de chaque arbre (39) sont prévus sur des sections égales situées entre deux plans s'étendant perpendiculairement aux arbres (39).

6. Dispositif selon l'une des revendications précédentes, caractérisé en ce que l'axe longitudinal du récipient (31) s'étend sensiblement verticalement ou horizontalement.

7. Dispositif selon l'une des revendications précédentes, caractérisé en ce que le récipient (31) présente une section transversale sensiblement rectangulaire.

8. Dispositif selon la revendication 7, caractérisé en ce que les parois du récipient (31), qui s'étendent parallèlement aux arbres (39), présentent des côtés intérieurs qui sont constitués de plusieurs zones en parties de cylindre (31b), et en ce que chaque arbre (39) est disposé sensiblement dans l'axe d'une partie de cylindre.

9. Dispositif selon la revendication 7 ou 8, caractérisé en ce que des éléments de guidage de courant sont disposés sur les côtés intérieurs des parois du récipient s'étendant perpendiculairement aux arbres (39) ou en ce que des zones des côtés intérieurs sont formées de façon correspondante et dévient l'écoulement du mélange gaz-adsorbant/absorbant vers le milieu du récipient.

10. Dispositif selon l'une des revendications précédentes, caractérisé en ce qu'au moins une ouverture d'amenée est prévue pour le gaz brut et pour l'adsorbant/absorbant respectivement.

11. Dispositif selon la revendication 10, caractérisé en ce que l'au moins une ouverture d'amenée (33) pour le gaz brut et l'au moins une ouverture pour l'adsorbant/absorbant, ainsi qu'au moins une ouverture d'évacuation (35) pour le gaz purifié, sont agencées dans les zones d'extrémité axiales du récipient (31) de façon telle que la purification du gaz brut est effectuée selon le principe d'écoulement à co-courant ou à contre-courant.

12. Dispositif selon l'une des revendications précédentes, caractérisé en ce qu'un dispositif collecteur (45) pour l'adsorbant/absorbant est prévu sur le récipient (31).

13. Dispositif selon la revendication 12, caractérisé en ce que le dispositif collecteur (45) est prévu sur la face frontale du récipient côté sol, l'axe longitudinal du récipient (31) s'étendant verticalement.

14. Dispositif selon la revendication 12, caractérisé en ce que le dispositif collecteur (45) est prévu dans la zone côté sol de la paroi du récipient, l'axe longitudinal du récipient (31) s'étendant horizontalement.

15. Dispositif selon la revendication 14, caractérisé en ce qu'un convoyeur (47) du dispositif collecteur (45) s'étend sur toute la longueur de la zone côté sol de la paroi de récipient ou sur une zone voisine du côté évacuation de gaz.

16. Dispositif selon la revendication 15, caractérisé en ce que le convoyeur (47) du dispositif collecteur (45) convoie l'adsorbant/absorbant dans un puits collecteur (51) à partir duquel une partie prédéterminée de l'adsorbant/absorbant peut être renvoyée au récipient (31) sous la forme d'une boucle, l'adsorbant/absorbant se trouvant dans le puits collecteur servant au maintien de la différence de pression entre le côté amenée de gaz et le côté évacuation de gaz du récipient.

17. Dispositif selon la revendication 16, caractérisé en ce qu'un dispositif d'évacuation (59) prévu dans le puits collecteur (51) évacue une partie prédéterminée de l'adsorbant/absorbant pour le traitement en tant que déchets.

18. Dispositif selon l'une des revendications précédentes, caractérisé en ce qu'un dispositif d'amenée d'adsorbant/absorbant (37) est prévu sur le récipient (31).

19. Dispositif selon la revendication 18, caractérisé en ce que le dispositif d'amenée d'adsorbant/absorbant (37) comprend un dispositif pour l'addition d'eau jusqu'à un taux d'humidité prédéterminé.
